# FASCICULE DE BREVET EUROPEEN

(11) **EP 1 713 265 B1**
(45) Date de publication et mention de la délivrance du brevet: **19.12.2018**
(21) Numéro de dépôt: 06290536.9
(22) Date de dépôt: 04.04.2006
(51) Int. Cl.: H04N 5/455, H04N 5/46, H04N 21/426

(54) **Dispositif de réception de signaux analogiques de télévision numérique et récepteur correspondant**
Vorrichtung zum Empfang analoger Signale in einem digitalen Fernsehempfänger und entsprechender Empfänger
Device for receiving analoge signals in a digital television receiver and corresponding receiver

(30) Priorité: 11.04.2005 FR 0503573
(43) Date de publication de la demande: 18.10.2006
(73) Titulaire: PARROT FAURECIA AUTOMOTIVE, 75010 Paris (FR)
(72) Inventeur: Schmitt, Julien, 91120 Palaiseau (FR)
(74) Mandataire: Cabinet Plasseraud

(56) Documents cités:
- EP-A1- 1 259 077
- US-A- 6 005 640
- US-B1- 6 377 316

## Description

La présente invention concerne un dispositif de réception de signaux de télévision numérique et un récepteur correspondant.

Les signaux de télévision numérique sont soit des signaux réels dits en fréquence intermédiaire, soit des signaux complexes non réels dits en bande de base et, en fonction de la nature du signal, il existe différents dispositifs de réception.

De manière générale, un signal analogique hertzien réel est reçu puis introduit dans un tuner et un étage d'amplification avant d'être converti en signaux numériques.

Dans un premier cas, le signal délivré par le tuner est un signal réel qui doit être transposé en bande de base pour former un signal complexe comprenant une partie réelle et une partie imaginaire formant un signal pouvant être démodulé.

Dans un autre cas, le tuner délivre directement un signal en bande de base dont chacune des composantes réelle et imaginaire est introduite dans un étage de correction pour une correction de phase, de gain et de composante continue pour délivrer un signal pouvant être démodulé.

Avantageusement, dans l'un ou l'autre des cas, il est prévu une commande automatique de contrôle du gain, ou AGC, permettant de commander le gain de l'étage d'amplification du signal hertzien en fonction de l'amplitude du ou des signaux après l'étage de conversion analogique-numérique.

Cependant, ces deux types de réception ne sont pas compatibles, de sorte qu'un dispositif spécifique est prévu pour chaque type de signal particulier, un premier type est prévu pour être raccordé à un tuner délivrant des signaux réels, et un autre type à un tuner délivrant des signaux complexes non réels.

Le but de la présente invention est de résoudre ce problème en définissant un dispositif de réception de signaux de télévision numérique, apte à être connecté aux différents types de tuner existants pour recevoir aussi bien les signaux réels en fréquence intermédiaire que les signaux complexes en bande de base.

Le document US6005640 A divulgue un récepteur propre à réceptionner des signaux analogiques et des signaux numériques. Le contrôleur de système et les démultiplexeurs dirigent les signaux analogiques vers une première sortie et les signaux analogiques vers une seconde sortie. Lorsque les signaux sont analogiques, un traitement spécifique leur est destiné, lorsque les signaux sont numériques, un autre traitement spécifique leur est attribué.

À cet effet, la présente invention a pour objet un dispositif de réception d'un signal de télévision numérique, correspondant à un signal hertzien réel, le dispositif comprenant une entrée d'un signal réel et une entrée d'un signal imaginaire, caractérisé en ce que lesdites entrées sont reliées à un étage de correction et à un étage de transposition de fréquence, le dispositif comprenant en outre des moyens de pilotage du fonctionnement du dispositif en fonction du type du signal reçu, pour inhiber l'étage de correction si le signal reçu est un signal réel et pour inhiber l'étage de transposition si le signal reçu est un signal complexe non réel.

Ainsi, le dispositif de l'invention permet de recevoir et de traiter indifféremment les signaux réels et les signaux complexes.

Suivant d'autres caractéristiques de l'invention :
- lesdits étages de correction et de transposition sont connectés en série auxdites entrées, chacun des deux étages pouvant être inhibé en étant piloté pour ne pas affecter les signaux qui le traversent ;
- lesdits étages de correction et de transposition sont connectés en parallèle et en ce que le dispositif comprend un commutateur commandable permettant de relier lesdites entrées à l'un ou l'autre de ces deux étages ;
- le dispositif comporte en outre des moyens de génération d'une commande automatique du gain pour un amplificateur d'un équipement de réception dudit signal hertzien, et en ce que les moyens de pilotage sont adaptés pour piloter le fonctionnement des moyens de génération d'une commande automatique en fonction du type du signal reçu ;
- lesdits moyens de pilotage sont propres à fournir en entrée aux moyens de génération d'une commande automatique de gain, uniquement le signal de puissance maximale parmi les signaux reçus sur lesdites entrées ;
- lesdits moyens de pilotage sont adaptés pour transmettre auxdits étages de correction et de transposition, différentes valeurs prédéterminées en fonction du type du signal reçu ;
- lesdits moyens de pilotage sont adaptés pour connecter lesdits étages de correction et de transposition à différentes mémoires contenant lesdites valeurs prédéterminées, en fonction du type du signal reçu ;
- le dispositif comporte en outre des moyens automatiques de détermination du type de signal reçu entre un signal réel et un signal complexe non réel ;
- le dispositif comporte en outre un étage de conversion analogique-numérique disposé entre lesdites entrées et lesdits étages de correction et de transposition.

La présente invention concerne également un récepteur de télévision numérique du type comprenant des moyens de réception d'un signal hertzien réel pour délivrer un signal de télévision numérique et un dispositif de réception d'un tel signal, caractérisé en ce que ledit dispositif est un dispositif tel que décrit précédemment.

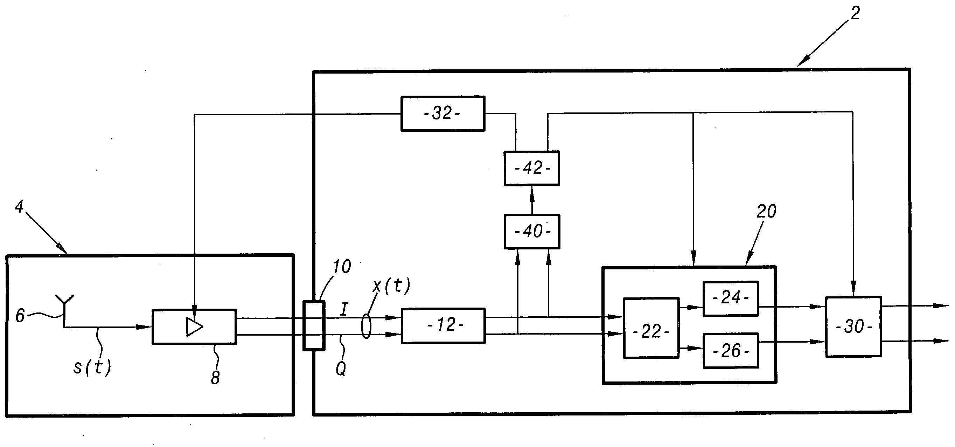

L'invention sera mieux comprise à la lecture de la description qui va suivre, donnée uniquement à titre d'exemple et faite en se référant au dessin annexé, qui représente un schéma synoptique d'un dispositif de réception selon l'invention.

Sur la figure, on a représenté schématiquement un dispositif de réception 2 de signaux analogiques de télévision numérique selon l'invention, également appelé en anglais « Analog Front End Demodulator ».

Ce dispositif 2 est relié à un équipement 4 de réception d'un signal hertzien s(t) comprenant une antenne 6 reliée à un étage de réception et d'amplification 8, comprenant par exemple un tuner et des éléments d'amplification commandables. En fonction des cas, cet étage 8 délivre en sortie soit une composante réelle et une composante imaginaire d'un signal en bande de base, soit un signal réel en fréquence intermédiaire.

Le dispositif 2 comprend tout d'abord une entrée de signal 10 permettant de recevoir un signal reçu x(t) correspondant au signal hertzien s(t) et qui est soit un signal réel en fréquence intermédiaire, soit un signal complexe non réel en bande de base. Plus précisément, l'entrée 10 comprend une entrée de composante réelle I et une entrée de composante imaginaire Q.

Ainsi, lorsque l'étage 8 délivre uniquement un signal réel en fréquence intermédiaire, seule la borne de l'entrée 10 correspondant à la borne d'entrée d'une composante réelle est active.

A l'inverse, lorsque l'étage 8 délivre un signal en bande de base comprenant une composante réelle et une composante imaginaire, les deux bornes de l'entrée 10 sont actives.

Dans le mode de réalisation décrit, l'entrée 10 du dispositif 2 est reliée à un étage de conversion analogique-numérique 12 permettant d'effectuer une conversion analogique-numérique des signaux réel I et imaginaire Q.

Cet étage 12 de conversion est relié en sortie à un étage 20 de correction comprenant, dans le mode de réalisation décrit, une unité 22 de correction d'erreurs de phase et de gain et des unités 24 et 26 respectivement de correction des composantes continues de la composante réelle et de la composante imaginaire.

Enfin, l'étage 20 est relié en sortie à un étage 30 de transposition de fréquence, délivrant en sortie un signal en bande de base sous la forme d'un signal représentant la composante réelle et d'un signal représentant la composante imaginaire. Les sorties de l'étage 30 forment les sorties du dispositif 2 et délivrent un signal pouvant être démodulé.

Avantageusement, le dispositif comprend une unité 32 de génération d'une commande automatique du gain pour l'étage de réception et d'amplification 8, adaptée pour générer un signal destiné à modifier le gain de l'amplification afin d'optimiser la conversion réalisée dans cet étage 8. Une telle commande automatique de gain est réalisée d'une manière connue en soi.

Par ailleurs, le dispositif comprend une unité 40 de détermination du type du signal reçu x(t), entre un signal réel et un signal complexe non réel ainsi qu'une unité 42 de pilotage du fonctionnement du dispositif 2 en fonction du type déterminé du signal reçu.

Dans le mode de réalisation décrit, l'unité 40 est connectée à la sortie de l'étage de conversion 12 et reçoit en entrée, les composantes réelle I et imaginaire Q du signal reçu x(t), converties en signaux numériques. Différents tests sont appliqués à ces signaux et notamment un test permettant d'identifier le signal d'intensité maximale et un test permettant de déterminer si un de ces signaux est nul ou sensiblement nul. Ces tests servent à déterminer le type du signal reçu x(t), notamment entre un signal réel et un signal complexe. Plus précisément, si la composante imaginaire Q est un signal sensiblement nul, le signal reçu x(t) est considéré comme étant un signal réel.

Cette information de type de signal reçu est transmise à l'unité 42 qui pilote en conséquence différents éléments du dispositif 2 et notamment l'étage 20 de correction, l'étage 30 de transposition et le contrôle automatique de gain 32.

L'unité 42 de pilotage inhibe l'étage de correction 20 lorsque le signal reçu x(t) est un signal réel et inversement, inhibe l'étage de transposition 30 lorsque le signal reçu x(t) est un signal complexe non réel.

Avantageusement, l'unité 42 inhibe une partie de l'entrée 10 en reliant l'entrée de la composante imaginaire Q à la masse lorsque le signal reçu x(t) est un signal réel afin d'éviter les parasites sur cette entrée.

Dans le mode de réalisation décrit, l'unité 42 pilote les étages 20 de correction et 30 de transposition en leur fournissant des valeurs à utiliser au cours des étapes de correction et de transposition, ces valeurs étant préalablement stockées dans des mémoires périphériques non représentées.

Par exemple, l'unité 42 commute des interrupteurs permettant de relier chacune des unités 22 de correction d'erreurs de phase et de gain, 24 et 26 de correction de composantes continues ainsi que l'étage 30 de transposition, à des mémoires différentes pour leur transmettre différentes valeurs prédéterminées en fonction du type du signal reçu.

Ainsi, lorsque l'unité 40 détermine que le signal reçu x(t) est un signal réel, les unités 22, 24 et 26 sont commutées de manière à recevoir en entrée, des valeurs de correction neutres, n'affectant pas le signal reçu, tandis que l'étage 30 de transposition de fréquence, reçoit en entrée des valeurs correspondant à la transposition de fréquence permettant de transformer le signal reçu x(t) en un signal en bande de base pouvant être démodulé.

Ainsi, lorsque l'unité 40 détermine que le signal reçu x(t) est un signal réel, les unités 22, 24 et 26 sont commutées de manière à recevoir en entrée, des valeurs de correction neutres, n'affectant pas le signal reçu, tandis que l'étage 30 de transposition de fréquence, reçoit en entrée des valeurs correspondant à la transposition de fréquence permettant de transformer le signal reçu x(t) en un signal en bande de base pouvant être démodulé.

A l'inverse, si le signal reçu x(t) est un signal complexe, l'unité 22 reçoit des valeurs de correction d'erreurs de phase et de gain déterminées de manière classique, et les unités 24 et 26 reçoivent en entrée des valeurs de correction des composantes continues.

Dans ce cas, l'étage de transposition 30 reçoit en entrée une valeur unitaire, de sorte qu'aucune transposition n'est effectuée et que cet étage 30 n'affecte pas le signal qui le traverse.

Par ailleurs, l'unité 42 pilote l'unité 32 de commande automatique de gain en lui adressant en entrée le signal d'intensité maximale entre les signaux I et Q convertis en signaux numériques. La commande automatique du gain de l'étage 8 est ainsi réalisée en fonction du signal de puissance maximale afin d'éviter des phénomènes de saturation au cours de l'amplification tout en permettant une amplification optimale pour une conversion précise.

Par exemple, l'unité 40 comporte un comparateur interposé entre les sorties de l'étage 12 de conversion et l'unité 32 de commande automatique de gain pour ne transmettre que le signal de puissance maximale entre les signaux de sortie de l'étage 12 de conversion.

Bien entendu, d'autres modes de réalisation de l'invention peuvent être envisagés.

Par exemple, les unités 20 de correction et 30 de transposition sont connectées en série mais dans l'ordre inverse de celui présenté précédemment, de sorte que le signal venant de l'unité 12 entre d'abord dans l'unité de transposition puis dans l'unité de correction. De même que précédemment, l'unité de correction est inhibée si le signal est réel et l'unité de transposition est inhibée si le signal est un complexe non réel.

Par exemple, les étages 20 de correction et 30 de transposition sont disposés en parallèle et l'unité 42 pilote une commutation entre ces étages en fonction du type du signal reçu. Chacun des étages 20 et 30 pouvant être connecté ou pas à la suite de l'étage précédent. Les sorties du dispositif sont formées soit par les sorties de l'étape de correction, soit par les sorties de l'étage de transposition.

En variante, les deux étages de connexion et de transposition sont connectés en parallèle à la sortie de l'étage précédent et l'unité 42 pilote une commutation de la sortie pour permettre de délivrer les sorties de l'étage de transposition ou celles de l'étage de correction.

Dans un autre mode de réalisation, l'étage 8 de réception et d'amplification est adapté pour réaliser une amplification différente sur chaque voie permettant de commander séparément l'amplification sur la voie du signal réel et sur la voie du signal imaginaire et la commande automatique de gain est réalisé séparément sur chaque voie. En conséquence, la commande de gain est effectuée de la même manière quelque soit le type du signal reçu.

Dans encore un autre mode de réalisation, le dispositif est configuré manuellement pour être connecté soit à un tuner délivrant un signal réel en fréquence intermédiaire, soit à un tuner délivrant un signal en bande de base. Par exemple, un certain nombre de commutateurs ou de cavaliers sont disposés sur une face externe du dispositif pour être actionnés manuellement par un utilisateur de manière à transmettre à l'unité de pilotage l'information relative au type de signal.

Avantageusement, il est fait usage de commutateurs logiciels par le biais d'un registre de mémoire programmable dans lequel est inséré, avant utilisation, une information renseignant l'unité de pilotage sur le type de signal en entrée entre un signal réel et un signal complexe non réel.

## Revendications

1. Dispositif (2) de réception d'un signal (x(t)) de télévision numérique, correspondant à un signal hertzien réel (s(t)), le dispositif comprenant une entrée d'une composante réelle (I) et une entrée d'une composante imaginaire (Q), lesdites entrées (10) étant reliées à un étage (20) de correction et à un étage (30) de transposition de fréquence, le dispositif (2) comprenant en outre
- une unité de détermination (40) du type de signal reçu entre un signal réel et un signal complexe non réel, l'unité de détermination étant apte à considérer que le signal reçu est un signal réel si la composante imaginaire (Q) est un signal sensiblement nul,
- des moyens (42) de pilotage du fonctionnement du dispositif (2) en fonction du type du signal reçu (x(t)), lesdits moyens de pilotage recevant l'information du type de signal reçu par l'unité de détermination (40), lesdits moyens de pilotage étant propre à inhiber l'étage de correction (20) si le signal reçu (x(t)) est un signal réel et à inhiber l'étage de transposition (30) si le signal reçu (x(t)) est un signal complexe non réel,.

2. Dispositif selon la revendication 1, **caractérisé en ce que** lesdits étages (20) de correction et (30) de transposition sont connectés en série auxdites entrées (10), chacun des deux étages pouvant être inhibé en étant piloté pour ne pas affecter les signaux qui le traversent.

3. Dispositif selon la revendication 1, **caractérisé en ce que** lesdits étages (20) de correction et (30) de transposition sont connectés en parallèle et **en ce que** le dispositif (2) comprend un commutateur commandable permettant de relier lesdites entrées (10) à l'un ou l'autre de ces deux étages.

4. Dispositif selon l'une quelconque des revendications 1 à 3, **caractérisé en ce qu'**il comporte en outre des moyens (32) de génération d'une commande automatique du gain pour un amplificateur (8) d'un équipement (4) de réception dudit signal hertzien (s(t)), et **en ce que** les moyens (42) de pilotage sont adaptés pour piloter le fonctionnement des moyens (32) de génération d'une commande automatique en fonction du type du signal reçu (x(t)).

5. Dispositif selon la revendication 4, **caractérisé en ce que** lesdits moyens (42) de pilotage sont propres à fournir en entrée aux moyens (32) de génération d'une commande automatique de gain, uniquement le signal de puissance maximale parmi les signaux reçus sur lesdites entrées (10).

6. Dispositif selon l'une quelconque des revendications 1 à 5, **caractérisé en ce que** lesdits moyens (42) de pilotage sont adaptés pour transmettre auxdits étages (20) de correction et (30) de transposition, différentes valeurs prédéterminées en fonction du type du signal reçu (x(t)).

7. Dispositif selon la revendication 6, **caractérisé en ce que** lesdits moyens (42) de pilotage sont adaptés pour connecter lesdits étages (20) de correction et (30) de transposition à différentes mémoires contenant lesdites valeurs prédéterminées, en fonction du type du signal reçu (x(t)).

8. Dispositif selon l'une quelconque des revendications 1 à 7, **caractérisé en ce qu'**il comporte en outre un étage (12) de conversion analogique-numérique disposé entre lesdites entrées (10) et lesdits étages (20) de correction et (30) de transposition.

9. Récepteur de télévision numérique du type comprenant des moyens (6, 8) de réception d'un signal hertzien réel (s(t)) pour délivrer un signal (x(t)) de télévision numérique et un dispositif de réception d'un tel signal, **caractérisé en ce que** ledit dispositif (2) est un dispositif selon l'une quelconque des revendications 1 à 8.

## Patentansprüche

1. Vorrichtung (2) zum Empfang eines digitalen Fernsehsignals (x(t)), das einem realen Hertzschen Signal (s(t)) entspricht, wobei die Vorrichtung einen Eingang einer Realkomponente (I) und einen Eingang einer Imaginärkomponente (Q) aufweist, wobei die Eingänge (10) mit einer Korrekturstufe (20) und mit einer Frequenztranspositionsstufe (30) verbunden sind, wobei die Vorrichtung (2) ferner aufweist:
- eine Bestimmungseinheit (40) zur Bestimmung des Typs des empfangenen Signals zwischen einem realen Signal und einem nichtrealen komplexen Signal, wobei die Bestimmungseinheit fähig ist, in Betracht zu ziehen, dass das empfangene Signal ein reales Signal ist, wenn die Imaginärkomponente (Q) im Wesentlichen ein Nullsignal ist,
- Steuerungseinrichtungen (42) zur Steuerung des Betriebs der Vorrichtung (2) in Abhängigkeit von dem Typ des empfangenen Signals (x(t)), wobei die Steuerungseinrichtungen über die Bestimmungseinheit (40) die Information betreffend den Typ des empfangenen Signals empfangen, wobei die Steuerungseinrichtungen geeignet sind, die Korrekturstufe (20) zu hemmen, wenn das empfangene Signal (x(t)) ein reales Signal ist, und die Transpositionsstufe (30) zu hemmen, wenn das empfangene Signal (x(t)) ein nichtreales komplexes Signal ist.

2. Vorrichtung nach Anspruch 1, **dadurch gekennzeichnet, dass** die Korrekturstufe (20) und die Transpositionsstufe (30) in Reihenschaltung mit den Eingängen (10) angeordnet sind, wobei jede der zwei Stufen dadurch gehemmt werden kann, dass sie gesteuert wird, um auf die Signale, die durch sie hindurch laufen, nicht einzuwirken.

3. Vorrichtung nach Anspruch 1, **dadurch gekennzeichnet, dass** die Korrekturstufe (20) und die Transpositionsstufe (30) in Parallelschaltung angeordnet sind, und dadurch, dass die Vorrichtung (2) einen steuerbaren Umschalter aufweist, der erlaubt, die Eingänge (10) mit der einen oder der anderen dieser zwei Stufen zu verbinden.

4. Vorrichtung nach einem der Ansprüche 1 bis 3, **dadurch gekennzeichnet, dass** sie ferner Einrichtungen (32) aufweist, die einen automatischen Verstärkungsbefehl für einen Verstärker (8) einer das Hertzsche Signal (s(t)) empfangenden Einrichtung (4) erzeugen, und dadurch, dass die Steuerungseinrichtungen (42) eingerichtet sind, um den Betrieb der einen automatischen Befehl erzeugenden Einrichtungen (32) in Abhängigkeit von dem Typ des empfangenen Signals (x(t)) zu steuern.

5. Vorrichtung nach Anspruch 4, **dadurch gekennzeichnet, dass** die Steuerungseinrichtungen (42) geeignet sind, um am Eingang zu den einen automatischen Verstärkungsbefehl erzeugenden Einrichtungen (32) unter den an den Eingängen (10) empfangenen Signalen nur das Signal maximaler Leistung bereitzustellen.

6. Vorrichtung nach einem der Ansprüche 1 bis 5, **dadurch gekennzeichnet, dass** die Steuerungseinrichtungen (42) eingerichtet sind, um in Abhängigkeit von dem Typ des empfangenen Signals (x(t)) unterschiedliche vorgegebene Werte an die Korrekturstufe (20) und die Transpositionsstufe (30) zu übertragen.

7. Vorrichtung nach Anspruch 6, **dadurch gekennzeichnet, dass** die Steuerungseinrichtungen (42) eingerichtet sind, um in Abhängigkeit von dem Typ des empfangenen Signals (x(t)) die Korrekturstufe (20) und die Transpositionsstufe (30) mit unterschiedlichen Speichern, die die vorgegebenen Werte enthalten, zu verbinden.

8. Vorrichtung nach einem der Ansprüche 1 bis 7, **dadurch gekennzeichnet, dass** sie ferner eine Analog/Digital-Umwandlungsstufe (12) aufweist, die zwischen den Eingängen (10) einerseits und der Korrekturstufe (20) und der Transpositionsstufe (30) andererseits angeordnet ist.

9. Digitaler Fernsehempfänger des Typs mit Einrichtungen (6, 8) zum Empfang eines realen Hertzschen Signals (s(t)), um ein digitales Fernsehsignal (x(t)) auszugeben, und mit einer Vorrichtung zum Empfang eines solchen Signals, **dadurch gekennzeichnet, dass** die Vorrichtung (2) eine Vorrichtung nach einem der Ansprüche 1 bis 8 ist.

## Claims

1. Device (2) for receiving a digital television signal (x(t)) corresponding to a real radio signal ((s(t)), the device comprising an input for a real component (1) and an input for an imaginary component (Q), said inputs (10) being connected to a correction stage (20) and a frequency conversion stage (30), the device (2) further comprising
a determination unit (40) of the type of signal received between a real signal and a non-real complex signal, the determining unit being able to consider that the received signal is a real signal if the imaginary component (Q) is a substantially zero signal,
means (42) for controlling the operation of the device (2) in accordance with the type of signal (x(t)) received, said control means receiving the information of the type of signal received by the determining unit (40), said control means being adapted to inhibit the correction stage (20) if the signal (x(t)) received is a real signal and to inhibit the conversion stage (30) if the signal (x(t)) received is a non-real complex signal.

2. Device according to claim 1, **characterized in that** he correction stage (20) and conversion stage (30) are connected in series to the inputs (10), each of the two stages being able to be inhibited whilst being controlled so as not to affect the signals which pass through it.

3. Device according to claim 1, **characterized in that** the correction stage (20) and conversion stage (30) are connected in parallel, and **in that** the device (2) comprises a controllable commutator which allows the inputs (10) to be connected to one or other of these two stages.

4. Device according to any of claims 1 to 3, **characterized in that** it further comprises an automatic gain control generation means (32) for an amplifier (8) of an item of equipment (4) for receiving the radio signal (s(t)), and **in that** the control means (42) are suitable for controlling the operation of the automatic gain control generation means (32) in accordance with the type of signal received (x(t)).

5. Device according to claim 4, **characterized in that** the control means (42) is capable of providing, at the input, the automatic gain control generation means (32) with only the maximum strength signal from the signals received at these inputs (10).

6. Device according to any of the claims 1 to 5, **characterized in that** the control means (42) is suitable for transmitting various predetermined values to the correction stage (20) and conversion stage (30) in accordance with the type of signal (x(t)) received.

7. Device according to claim 6, **characterized in that** the control means (42) are suitable for connecting the correction stage (20) and conversion stage (30) to various storage devices which contain the predetermined values, in accordance with the type of signal received (x(t)).

8. Device according to any of the claims 1 to 7, **characterized in that** it further comprising an analogue/digital conversion stage (12) which is arranged between the inputs (10) and the correction stage (20) and conversion stage.

9. Digital television receiver of the type comprising means for receiving a real radio signal (s(t)) to deliver a digital television signal (x(t)).and a device for receiving of a signal of this type, **characterized in that** said device (2) is a device according to any of the claims 1 to 8.
